Europäisches Patentamt

European Patent Office

Office européen des brevets

(11) Publication number: **0 067 021
B1**

(12) **EUROPEAN PATENT SPECIFICATION**

(45) Date of publication of patent specification: **04.02.87**

(21) Application number: **82302783.4**

(22) Date of filing: **28.05.82**

(51) Int. Cl.⁴: **C 08 F 8/12**

(54) **Hydrolyzed ethylene vinyl acetate polymer and microcapsule.**

(30) Priority: **29.05.81 US 268443
29.05.81 US 268461
29.05.81 US 268442**

(43) Date of publication of application:
**15.12.82 Bulletin 82/50**

(45) Publication of the grant of the patent:
**04.02.87 Bulletin 87/06**

(84) Designated Contracting States:
**DE FR GB SE**

(56) References cited:
**GB-A-1 120 189
GB-A-1 468 793
US-A-3 882 005
US-A-3 985 719**

(73) Proprietor: **CAPSULATED SYSTEMS, INC.
833 Dayton-Springfield, Road
Fairborn Ohio 45324 (US)**

(72) Inventor: **Hart, Ronald L.
1650 E. Slater Court
Xenia Ohio 45385 (US)**
Inventor: **Work, Dale E.
115 N. Madison Road
London Ohio 43140 (US)**
Inventor: **Davis, Daniel
4245 Casstown Clark Road
Casstown Ohio 45312 (US)**
Inventor: **Bayless, Robert G.
1405 Birch Street
Yellow Springs Ohio 45387 (US)**

(74) Representative: **Warren, Anthony Robert et al
BARON & WARREN 18 South End Kensington
London W8 5BU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention represents an improved crosslinked partially hydrolyzed ethylene vinyl acetate copolymers and a highly impermeable microcapsule formed using the aforesaid polymer.

One of the principal applications which has arisen for hydrolyzed ethylene vinyl acetate (HEVA) polymers has been in the field of microencapsulation in which a dispersion of a capsule wall-forming polymeric material and a core material to be encapsulated is formed and the polymeric material is caused to deposit around the core material by a process known as coacervation.

Coacervation processes are well known and are the subject of numerous U.S. Patents, including U.S. Patent 2,800,457 to Green and U.S. Patent 3,674,704 to Bayless.

Bayless actually discloses a mircoencapsulation process using a narrow range of partially hydrolyzed EVA polymer (HEVA) as the capsule wall-forming material. Bayless teaches that mircroencapsulations in which 38 to 55% of the vinyl acetate groups in the polymer are hydrolyzed to vinyl alcohol groups are highly preferred to encapsulations employing polymers outside of this range. Thus, it was recognized that the polymeric materials used in encapsulation processes and, more particularly, HEVA polymers, must have well-defined properties which must be carefully controlled. In many applications the capsules must be impermeable to the diffusion of water and be relatively flexible and capable of withstanding normal handling. It has also been appreciated that variations in the properties of the capsule wall-forming polymers in turn result in variations in the quality and performance of the microcapsules. Efforts, therefore, have been directed to establishing a reliable source of HEVA polymer in which the properties of the polymer are sufficiently reproducible that from one batch of polymer to the next, high quality capsules can be obtained. These efforts met with only marginal success and the severe specifications which encapsulation processes place on the polymer and its concurrent expense forced several manufacturers to. abandon its production.

Although there are many published accounts of the procedures used to hydrolyze EVA polymers, U.S. Patent 3,985,719 affords the greatest control over the degree of hydrolysis. This patent reports that by controlling the water level in the reaction medium it is possible to achieve reproducibility in the alcoholysis reaction and obtain HEVA products having controllable and substantially uniform degrees of hydrolysis. In the process for alcoholysis of EVA taught in U.S. Patent 3,985,719, the aggregate initial water content of the components employed to form the reaction medium is not greater than 10 wt.% based on the weight of the reaction components, and in the course of the reaction, the system is regulated such that incremental introductions of the reaction components in the course of the reaction do not vary the water content by more than 50% and, preferably, not more than 20%. Thus, while factors such as byproduct acetate concentration, catalyst amount, reaction time and temperature, are known to affect the degree of hydrolysis, U.S. Patent 3,985,719 was the first to report that by controlling in addition to these other factors, not so much the amount of water but any change in the water content, reproducibility could be achieved. Thus, by maintaining specified water contents in the reaction components predetermined and reproducible degrees of hydrolysis are achieved.

In a process disclosed in US—A—3882005 for controlling the degree of alcoholysis of EVA and other ethylene-vinyl ester interpolymers, the amount of alcohol used is from about 2 to about 200 times the stoichiometric amount of alcohol required.

The present invention consists in a cross-linked hydrolyzed ethylene-vinyl acetate polymer prepared by reacting ethylene-vinyl acetate copolymer in a hydrocarbon solvent medium with a low-boiling alcohol in an alcoholysis reaction in the presence of an acid or alkaline catalyst while regulating the water present during the course of the reaction such that it does not vary by more than 50 wt.% from the initial water content, terminating the reaction upon hydrolyzing said polymer to the degree desired and reacting the hydrolysed copolymer with a cross-linking agent, characterised in that the low-boiling alcohol is reacted in an amount from 4 to 9 times the amount stoichiometrically required for said degree of hydrolysis, in that the cross-linking agent is a polyisocyanate and in that said polymer has a degree of hydrolysis of 10 to 75%, a vinyl acetate content of 3 to 45 mole %, a molecular weight of 30,000 to 200,000, and a melt index of 2 to 80.

The present invention uses to advantage the teachings of U.S. Patent 3,985,719 to control the degree of hydrolysis of EVA copolymer, but also provides a process which controls other polymeric properties which are particularly important in the use of HEVA copolymers in encapsulation. These properties are believed to be a function of the randomness of the vinyl-acetate distribution in the hydrolyzed polymer chain which is maximized in the present invention. These properties enable the inventors to obtain substantially impermeable microcapsules.

It is possible by means of the present invention to provide highly impermeable microcapsules, from a hydrolyzed ethylene vinyl-acetate polymer having well-defined properties for use in processes in which the polymer encapsulates a core material and forms a capsule wall by liquid-liquid phase separation or so-called coacervation. Not only the degree of hydrolysis but other properties of the polymer important from the standpoint of encapsulation are reproducibly afforded.

Microcapsules in which the aforesaid copolymers constitute the wall-forming material are a further embodiment of the invention.

It has been found that from the standpoint of encapsulations employing HEVA polymers, the degree of hydrolysis alone does not control the performance of the capsules formed from the polymer, but other factors apparently linked to the intramolecular distribution of the vinyl ester groups and the process whereby the polymer is hydrolyzed play an important role. Thus, it has been found that two polymers having equal degrees of hydrolysis will perform differently if they are hydrolyzed under very different conditions.

It has further been found that if the alcoholysis whereby ethylene-vinyl acetate copolymers are hydrolyzed is carried out in accordance with the teachings of U.S. Patent 3,985,719, using a polyisocyanate cross-linking agent and further using 4 to 9 and preferably 6 to 7 times the amount of alcohol stoichiometrically required, not only does the process have reproducibility, but the polymer yields capsules having a level of impermeability as determined by vapor and oxygen transmission rate tests superior to microcapsules produced using conventional HEVA polymers.

The polymer preferably contains 15 to 25 mole % vinyl acetate and the balance ethylene. Minor amounts (up to 10 mole %) of a third monomer such as methyl methacrylate may be present.

The polymers embodying the invention have a number average molecular weight of 30,000 to 200,000. If the molecular weigth is too great the polymer may not dissolve in the encapsulation system and if it is too low there may be some problem with the physical character of the capsules. To provide the required encapsulation properties, the polymers have a melt index of 2 to 80 as determined by ASTM D-1238-65T. The polymers are hydrolyzed by a reaction known as an alcoholysis whereby some of the vinyl ester groups in the polymer are hydrolyzed to vinyl alcohol groups to yield a polymer having ethylene, vinyl ester and vinyl alcohol units.

The general sequence of the alcoholysis reaction is as follows:

An EVA copolymer is first dissolved in a hydrocarbon solvent by agitating and heating the two at a temperature somewhat in excess of the reaction temperature to be used but below the boiling point of the hydrocarbon solvent. When the EVA is substantially dissolved, the temperature of the resulting solution is adjusted to the vicinity of the boiling point of the low-boiling alcohol used for alcoholysis. Then, a predetermined amount of water is added directly to produce an HEVA with a desired degree of hydrolysis. To the copolymer solution there is next added with agitation a solution of catalyst in the low-boiling alcohol or in a mixture of the alcohol or hydrocarbon solvent. The catalyst solution may vary widely in catalyst content, concentrations from about 0.01 to 10% being preferred. The catalyst solution is preferably added over a period which will comprise from about one-half to one-tenth of the total reaction time, commencing with the addition of catalyst solution.

The alcoholysis reaction is carried out under conditions of agitation and temperature which are essentially similar to those which prevail during catalyst addition and taught in U.S. Patent 3,985,719. The byproduct acetate or other derived ester of the low-boiling alcohol can be removed as the alcoholysis reaction progresses; preferably, however, the ester is permitted to accumulate as the reaction proceeds.

The degree of alcoholysis obtained may be determined empirically, or by instantaneous analysis of the hydrolyzed copolymer or of the accumulated acetate or other ester byproduct of the alcohol as the reaction proceeds. Termination of the reaction is effected, at a point corresponding to the desired degree of hydrolysis, by addition of a substance capable of destroying the catalyst, e.g. the addition of a weak acid which is not itself a catalyst for the alcoholysis (e.g., acetic acid). The weak acid is added in an amount stoichiometrically equivalent to the catalyst or in moderate excess, and is preferably added neat.

After terminating the alcoholysis reaction the hydrolyzed polymeric product is recovered. It is generally preferred to precipitate it as a finely divided powder by adding a sufficient amount of the low-boiling alcohol used in the alcoholysis in amounts from 0.5 to 2 volumes per volume of the reaction mixture. Several schemes of precipitation and subsequent comminution into a fine powder or rubbery crumbs are possible depending on the final degree of hydrolysis. An easily-transferred slurry of the mother liquor is formed, and is readily filtered and washed, then dried as a finely divided solid. The mother liquor from the product recovery operation is combined with the low-boiling alcohol used in washing the product for distillation for solvent recovery and recycle. Minor amounts of either alcohol in the hydrocarbon or hydrocarbon in the alcohol fraction present no significant problem, provided the recycle streams are analyzed and their composition taken into account before reuse.

In accordance with the present invention, the water content of the reaction medium is controlled so that it does not vary more than by 50 wt.% from the initial water content. The processes described below in more detail.

The alcoholysis medium preferably comprises a mixture of low-boiling alcohol (the alcoholysis reactant) and a hydrocarbon solvent. The low-boiling alcohol may be any monohydric alcohol having up to 4 carbon atoms i.e., methanol, ethanol, n-propanol, i-propanol, n-butanol, s-butanol, i-butanol, or t-butanol. Primary alcohols (particularly methanol) are preferred. The hydrocarbon solvent may in essence be any hydrocarbon in which the polymer is soluble, which is inert with respect to the alcoholysis and has a boiling point of about 75° to 200°C. The hydrocarbon may be a branched paraffin hydrocarbon, for example, 2,2-dimethylbutane, 2,2,4 - trimethylpentane, or 2,5 - dimethylhexane, a cycloaliphatic hydrocarbon such a a methylcyclopentane, cyclohexane, cyclooctane, or decahydronaphtahlene, or an aromatic hydrocarbon such as benzene, toluene, xylene-isomer mixtures or the individual isomers thereof, ethylbenzene, cumene, pseudocumene, cymene, diisopropylbenzene, etc., Aromatic hydrocarbons (particularly toluene) are preferred.

The hydrocarbon solvent may be incorporated in the reaction medium in amounts ranging from about 2 to 500 parts per part alcohol and preferably from about 5 to 20 parts.

The process may be carried out using an acid or alkaline catalyst, although alkaline catalysts are generally preferred. Representative of the catalysts are lithium methoxide, sodium methoxide, sodium ethoxide, potassium isopropoxide, potassium t-butoxide, magnesium ethoxide, etc. Alternative catalysts comprise the hydroxides of the alkali metal and alkaline earth metals, such as lithium hydroxide, sodium hydroxide, potassium hydroxide, magnesium hydroxide, and calcium hydroxide and organic bases such as amines. Strong mineral and organic acids may also be used as catalysts, including sulfuric acid, hydrochloric acid, hydrofluoric acid, phosphoric acid, and p-toluenesulfonic acid. Those skilled in the art will realize that the alkali metal and alkaline earth metal catalysts can be generated *in situ* by adding the alkali or alkaline earth metal to the alcohol under anhydrous conditions.

The catalyst is incorporated in the reaction medium in conventional proportions relative to the ethylene-vinyl acetate or other polymeric material to by hydrolyzed. Employing alkali metal alkoxide or alkali metal hydroxide catalysts, the weight ratio of catalyst to the ethylene-vinyl ester interpolymer varies broadly from about 1:10,000 to about 1:1 ratios withn the range of from about 1:1000 to 1:10 being preferred. the catalyst concentration does not have a critical effect on the degree of hydrolysis, although large differences in catalyst concentrations may be accompanied by some change in the product.

As already indicated, alcoholysis is preferably initiated by adding a solution of the catalyst in the low boiling alcohol to a solution of the polymer in the hydrocarbon solvent. The concentration of the catalyst solution is not critical and may vary over a wide range, but concentrations ranging from 0.01 to 10% are preferred in most instances. Generally the polymer is dissolved in the hydrocarbon solvent in amounts ranging from 1 to 25% by weight.

The catalyst solution can be added to the hydrocarbon solution of the EVA polymer at a rate which can vary from almost instantaneous addition to a gradual addition extending over the entire reaction period. It is generally preferred to add the catalyst over a period which comprises 1/2 to 1/10 of the reaction time. In most cases the catalyst can be conveniently added over a period of 15 to 30 minutes with little effect on the degree of hydrolysis.

The alcoholysis reaction may be carried out at temperatures varying from 25 to 100°C and preferably 40 to 60°C. The rate of hydrolysis tends to decrease slightly as the ethylene content of the polymer increases. The reaction may be carried out under pressures ranging from atomospheric to 6.8 bar(100 psi). The time required to carry out the reaction as measured from the start of the catalyst addition can be broadly varied. U.S. Patent 3,985,719 teaches preferred reaction times from 0.05 to 10 hours. The shortest reaction time with adequate control over the degree of hydrolysis will be of the most economic advantage in commercial production. Reaction times of 2 to 3 hours have been found comfortable.

As indicated above, in accordance with the present invention, the water content is regulated as taught in U.S. Patent 3,985,719. According to the patent, the initial water content is limited to a maximum of 10 wt.%. This amount is relatively high and lower amounts are used in the present invention. Thus, in the present invention the initial water content is usually less than 1% based on the total weight of the reaction medium and is genrally in the range of 500 to 1500 ppm. The reaction is carried out under such conditions that the water content is not varied by other than the reaction equilibrium.

The alcoholysis reaction involves a complex equilibrium involving the relative amounts of water, metal alkoxide catalyst and alcohol. The amounts of water and alcohol work against each other as the equilibrium shifts. Increasing amounts of alcohol increase the degree of hydrolysis while increasing amounts of water decrease the degree of hydrolysis.

The initial water content is regulated to provide the desired partial degree of hydrolysis, alcoholysis or saponification. This correlation will depend on a number of factors, most importantly the amount of alcohol present. Within reasonable limits the amount of polymer and catalyst present have very little effect, but within broad limits they have a more considerable effect. Preferred water to alcohol ratios range from 0.002:1 to 0.02:1.

Several ratios of water and alcohol can yield a predetermined degree of hydrolysis, but in accordance with the present invention it has been determined that when the alcohol is used in amounts 4 to 9 times and preferably 6 to 7 times the amount stoichiometrically required to provide a given hydrolysis degree, superior capsule properties are achieved. When alcoholysis is carried out under these conditions as opposed to using amounts less than 4 or greater than 9 times that stoichiometrically required, a surprisingly impermeable capsule wall can be obtained. For example, a HEVA polymer containing 40% vinyl acetate and 60% ethylene having a degree of hydrolysis of 42% cannot be coacervated to form capsules in toluene when it is prepared using a stoichiometric amount of alcohol under essentially anhydrous conditions. On the other hand, when it has been prepared using 4 to 9 times the stoichimetric amount of methanol in accordance with the present inventioon, it will coacervate and form microcapsules having a capsule half-life of 100 hours. The term "half-life" as used herein refers to the time it takes one-half of the internal phase to be extracted from the capsule when the capsules are immersed in water.

Alcoholysis is terminated when the desired degree of hydrolysis is achieved. For use in encapsulation, HEVA polymers having a degree of hydrolysis ranging from 10 to 75%, preferably 30 to 50% and more preferably 35 to 45% (vinyl alcohol to the sum of vinyl alcohol and vinyl acetate moieties) are suitable. The optimum degree of hydrolysis for use in encapsulations will vary with the vinyl ester content of the polymer as shown in the table below.

| Vinyl acetate | Hydrolysis |
|---|---|
| (%) | (%) |
| 42.5 | 41.5 |
| 40.0 | 36.5 |
| 37.5 | 31.5 |

The techniques described in U.S. Patent 3,985,719 can be used to determine the degree of hydrolysis and to terminate the reaction and work up the product.

The art tends to suggest that increased amounts of alcohol lead to poor capsule quality. It has been felt that higher amounts of alcohol would prevent the EVA polymer from extending during the reaction and result in local conentration or blocks of residual vinyl acetate, i.e., uneven or non-random hydrolysis. This unevenness or lack of uniformity in the distribution of the vinyl acetate would be expected to result in pores or pin-holes in the capsules formed from HEVA polymers. To the contrary, in accordance with the present invention it has been found that in using 4 to 9 times the stoichiometric amount of alcohol the polymer formed in accordance with the present invention provides highly impermeable and superior capsules.

The polymers embodying the present invention have been developed primarily for use in encapsulation processes, both microencapsulations wherein the capsule size ranges from 1 to 5000 μm and macroencapsulations where the capsule size is many time that including processes wherein the object to be encapsulated is in essence dip coated with the polymer. The high impermeability of the polymers embodying the present invention makes them particularly advantageous in this utility. It is believed that as a result of the higher order in the intramolecular distribution of vinyl acetate groups, the polymers embodying the present invention are able to provide impermeable "pin-hole" free capsules which are capable of protecting even the most highly moisture and/or oxygen sensitive materials.

The invention copolymers are preferably used in processes wherein the capsules are formed by liquid-liquid phase separation or so-called coacervation. In this regard they are effective when used in processes such as disclosed in the co-inventors' U.S. Patents 3,674,704; 3,755,190 and 4,107,071.

An encapsulation process embodying the present invention based on liquid-liquid phase separation is described below.

In the preferred system the liquid vehicle is the solvent used in manufacturing the polymer, which in the preferred case is toluene. Thus, in the preferred system the polymer is miscible in the vehicle. This necessitates the use of a phase inducing agent that creates immiscibility between the vehicle and the polymer such that the polymer can exist as a separate phase. The phase inducing agent may be any of a diversity of materials used for the purpose in the art, incuding oils and/or polymers such as EVA, a more soluble HEVA, cottom seed oil, paraffin oil, PVA, etc. Temperature alone can also be used to induce phase separation.

To produce highly impermeable microcapsules, the amount of phase inducing agent is preferably limited to the minimum amount required to render the polymer immiscible upon coacervation. The presence of high amounts of phase inducer can result in pin-holes in the capsule wall. The optimum amount will therefore vary with the vehicle, the phase inducing agent and the conditions relied upon to induce phase separation. Typically, however, the phase inducing agent is present in the system in an amount of about 5 to 30%.

Solvents eligible for use in encapsulation include organic solvents which can dissolve both the poly(ethylen-co-vinyl acetate) and the phase-separation-inducing material. The solvents are generally well-known, or are easily found without undue experimentation and include: cyclohexanol; methylisobutyl ketone; trichloroethylene, tetrachlorethylene; methylene chloride, carbon tetrachloride, chloroform, toluene, zylene, benzene, chlorobenzene, ethyleneglycolmonobutylether, 1 - methyl - 2 - pyrrolidinone; butanol, mesityl oxide, butyrolactone, cyclohexanone, and the like.

Preferred solvent selection will depend on the degree of hydrolysis of the polymer used. Conversely the optimum degree of hydrolysis for the polymer will depend on the solvent system used. Thus, where a certain solvent is required to encapsulate a particular core material, the hydrolysis degree of the polymer should be appropriately adjusted. Test samples have established that a hydrolysis degree of 42% is optimum when toluene is the vehicle. On the other hand, where the hydrolysis degree ranges from 47 to 48%, the solvent is preferably trichloroethylene (TCE). To some extent the degree of hydrolysis of the polymer and solvent selection can be correlated based on a property of the solvent quantified as the "solubility parameter". Solvents having a poor hydrogen bonding character and a solubility parameter ranging from 7.5 to 8.8 such as toluene tend to be suitable for polymers containing 40% vinyl acetate and having a degree of hydrolysis of 30 to 40%. Whereas solvents having a slightly higher solubility parameter such as TCE tend to be better for polymers having a degree of hydrolysis greater than 40%.

In order to more completely explain the invention, a particular procedure for establishing a suitable encapsulating system will be described. This particular procedure involves the formation of an un-ionized solution system comprising two different polymeric materials and a common solvent—one polymeric material being the HEVA polymer capsule wall material prepared as disclosed above and the other polymeric material being a complementary phase separation inducing material. Separation of this system into two separate liquid solution phases (one containing a major amount of the HEVA polymer and the other containing a major amount of the phase inducing polymer material) is accomplished by phenomenon of liquid-liquid phase separation known from the work of Dobry et al published in "Journal of Polymer Science," Vol. 2, No. 1, pp. 90—100 (1947). The two polymeric materials and the solvent can be assembled in any order to effect the phase seaparation, but it is preferred first to form a dilute solution of the HEVA polymer that is intended to be in the capsule-wall forming phase, and then to induce liquid-liquid phase separation by addition of the phase inducing polymeric material, whose only role is to induce and maintain the phase separation.

The order of addition can be reversed, or the two polymeric materials and the solvent can be brought together at one time, once the proper quantitive relations are established for the particular materials being used. The resulting volume and viscosity (mostly as it is controlled by concnetration) of the two separate pahses are independent of the order of assembly.

The core material, always a minor component of the total volume of the system, can be added before, during or after the formation of the solution or its separation into two solution phases. Similarly, the agitation of the system can be begun before, during or after either of these steps. It is preferred, however, to agitate before, during and after the phase separation, and to introduce the core material before the phase separation has taken place.

The intensity of agitation is made such as to reduce the core material to the desired entity size, if such is necessary, and in any event, to assure thorough dispersion of it in the vehicle. The core entity size is pre-selected to give the desired capsule size after allowance for encapsulating wall thickness. With solid core materials, the entity size can be predetermined and obtained by suitable grinding or milling.

When the three-phase capsule-forming system is established in this way, the continuous or vehicle phase consists of a more dilute and less viscous solution containing the greater part of the phase inducing polymeric material; and that polymeric material is the material which imparts the necessary immiscibility between the vehicle and the wall-forming solution phase and permits the latter to exist as a separate dispersed phase. Any small amount of phase inducing agent that may pass into the separated wall-forming solution phase by entrainment or otherwise is not objectionable.

In accordance with the present invention, the capsules are hardened by addition of a polyisocyanate such as toluene diisocyanate as cross-linking agent which will react with the hydroxy groups in the capsule wall. The cross-linking magnet is preferably used in an amount of 0.5 to 3 times the isocyanate to hydroxy equivalent.

The improved permeability achieved in the capsules embodying the present invention is believed to be a product of the order or randomness of the vinyl alcohol groups in the polymer chain. Upon cross-linking the polymer molecules are believed to be joined in a closely packed array. As a result of the regular and un-localized distribution of the vinyl alcohol groups, which are sites of cross-linking, pin-holes do not develop in the cross-linked matrix and a highly impermeable capsule wall is achieved.

The capsules formed in the present invention may range from 1 to 5000 μm in particle size and are usually 5 to 1000 μm. As already discussed, where the core material is a liquid, capsule size can be adjusted by varying the agitation of the system. With a solid core, the core entity can be ground or milled to the desired particle size prior to encapsulation.

The performance of capsules formed using the polymer embodying the present invention is a product of both the properties of the polymer (and the process whereby it is prepared) and the coacervation conditions.

While the invention has been described in detail and with reference with specific embodiments thereof, it will be apparent to those skilled in the art to which it releates that numerous variations and changes therein are possible without departing from the scope thereof as defined in the appended claims.

## Claims

1. A cross-linked hydrolyzed ethylene-vinyl acetate polymer having a degree of hydrolysis of 10 to 75% prepared by reacting ethylene-vinyl acetate copolymer having a vinyl acetate content of 3 to 45 mole %, a molecular weight of 30,000 to 200,000, and a melt index of 2 to 80 in a hydrocarbon solvent medium with a low-boiling alcohol in an alcoholysis reaction in the presence of an acid or alkaline catalyst while regulating the water present during the course of the reaction such that it does not vary by more than 50 wt.% from the initial water content, terminating the reaction upon hydrolyzing said polymer to the degree desired and reacting the hydrolysed copolymer with a cross-linking agent, characterzed in that the low-boiling alcohol is reacted in an amount from 4 to 9 times the amount stoichiometrically required for said degree of hydrolysis and in that the cross-linking agent is a polyisocyanate.

2. An ethylene-vinyl acetate copolymer according to claim 1, wherein the degree of hydrolysis is 10 to 70%.

3. An ethylene-vinyl acetate copolymer according to claim 1 or claim 2, wherein the weight ratio of said hydrocarbon solvent to said low-boiling alcohol is 2 to 500 parts hydrocarbon solvent per part alcohol.

4. An ethylene vinyl acetate copolymer according to any preceding claim, wherein said solvent is toluene and said low-boiling alcohol is methanol.

5. An ethylene-vinyl acetate copolymer according to any preceding claim, wherein the water content of the reaction medium upon initiating said alcoholysis is 500 to 1500 ppm.

6. A microcapsule having discrete wall and core entities, formed from a cross-linked ethylene-vinyl acetate copolymer according to any preceding claim.

## Patentansprüche

1. Vernetztes hydrolysiertes Ethylen - Vinylacetat - Polymer mit einem Hydrolysegrad von 10 bis 75%, das in der Weise hergestellt wurde, daß Ethylen - Vinylacetat - Copolymer mit einem Hydrolysegrand von 10 bis 75%, einem Vinylestergehalt von 3 bis 45 Mol-%, einem Molekulargewicht von 30 000 bis 200 000 und einem Schmelzindex von 2 bis 80 in einem Kohlenwasserstofflösungsmittelmedium mit einem niedrig siedenden Alkohol in einer Alkoholysereaktion in Gegenwart eines sauren oder alkalischen Katalysators umgesetzt wird, wobei das im Verlauf der Reaktion vorhandene Wasser derart gesteuert wird, daß es nicht um mehr als 50 Gew.-% gegenüber dem Anfangswassergehalt variiert, die Reaktion nach Hydrolyse des Polymers bis zu dem erwünschten Grad beendet wird und das hydrolysierte Copolymer mit einem Vernetzungsmittel umgesetzt wird, dadurch gekennzeichnet, daß der niedrig siedende Alkohol in einer Menge von Vier- bis Neunfachen der für den Hydrolysegrad erforderlichen stöchiometrischen Menge umgesetzt wird und daß das Vernetzungsmittel ein Polyisocyanat ist.

2. Ethylen-Vinylacetat-Copolymer nach Anspruch 1, bei dem der Hydrolysegrad 10 bis 70% ist.

3. Ethylen-Vinylacetat-Copolymer nach Anspruch 1 oder Anspruch 2, bei dem das Gewichtsverhältnis des Kohlenwasserstofflösungsmittels zu dem niedrig siedenden Alkohol 2 bis 500 Teile Kohlenwasserstofflösungsmittel je Teil Alkohol ist.

4. Ethylen-Vinylacetat-Copolymer nach einem der vorausgehenden Ansprüche, bei dem das Lösungsmittel Toluol und der niedrig siedende Alkohol Methanol ist.

5. Ethylen-Vinylacetat-Copolymer nach einem der vorausgehenden Ansprüche, bei dem der Wassergehalt des Reaktionsmediums beim Einleiten der Alkoholyse 500 bis 1500 ppm ist.

6. Mikrokapsel mit Wand und Kern, die einzeln für sich ausgebildet sind, aus einem vernetzten Ethylen-Vinylacetat-Copolymer nach einem der vorausgehenden Ansprüche.

## Revendications

1. Polymère d'éthylène et d'acétate de vinyle hydrolysé réticulé ayant un degré d'hydrolyse de 10 à 75% préparé en faisant réagir un copolymère d'éthylène et d'acétate de vinyle ayant un degré d'hydrolyse de 10 à 75%, une teneur en ester vinylique de 3 à 45 moles %, un poids moléculaire de 30.000 à 200.000 et un indice de fusion de 2 à 80 dans une solvant hydrocarboné avec un alcool à bas point d'èbullition au cours d'une réaction d'alcoolyse en présence d'un catalyseur acide ou alcalin tout en réglant l'eau en présence pendant le déroulement de la réaction de façon qu'elle ne varie pas de plus de 50% en poids par rapport à la teneur initiale en eau, en arrêtant la réaction à l'hydrolyse de ce polymère au degré souhaité et en faisant réagir le copolymère hydrolysé avec un agent de réticulation, caractérisé en ce que l'alcool à bas point d'ébullition est mis à réagir en une quantité de 4 à 9 fois la quantité stoechiométriquement requise pour ce degré d'hydrolyse et en ce que l'agent de réticulation est un polyisocyanate.

2. Copolymère d'éthylène et d'acétate de vinyle suivant la revendication 1, dans lequel le degré d'hydrolyse est de 10 à 70%.

3. Coplymère d'éthylène et d'acétate de vinyle suivant la revendication 1 ou la revendication 2, dans lequel le rapport pondéral du solvant hydrocarboné à l'alcool à bas point d'ébullition est de 2 à 500 parties de solvant hydrocarboné par partie d'alcool.

4. Copolymère d'éthylène et d'acétate de vinyle suivant l'une quelconque des revendications précédentes, dans lequel le solvant est le toluène et l'alcool à bas point d'ébullition est le méthanol.

5. Copolymère d'éthylène et d'acétate de vinyle suivant l'une quelconque des revendications précédentes, dans lequel la teneur en eau du milieu de réaction lors du commencement de l'alcoolyse est de 500 à 1500 ppm.

6. Microcapsule comprenant une paroi et une âme distincte, formée à partir d'un copolymère d'éthylène et d'acétate de vinyle réticulé suivant l'une quelconque des revendications précédentes.